# FASCICULE DE BREVET EUROPEEN

(11) **EP 1 718 528 B1**
(45) Date de publication et mention de la délivrance du brevet: **18.03.2015**
(21) Numéro de dépôt: 04742470.0
(22) Date de dépôt: 09.04.2004
(51) Int. Cl.: B64D 11/06

(54) **AMENAGEMENT INTERIEUR D'UNE CABINE D'AERONEF**
INNENAUSBAU EINER FLUGZEUGKABINE
INTERNAL LAYOUT OF AN AIRCRAFT CABIN

(30) Priorité: 26.02.2004 FR 0401958
(43) Date de publication de la demande: 08.11.2006
(73) Titulaire: Airbus, 31707 Blagnac (FR)
(72) Inventeur: SAINT-JALMES, Bruno, 31400 Toulouse (FR); REZAG, André, 31200 Toulouse (FR); ZANEBONI, Jason, 31000 Toulouse (FR)
(74) Mandataire: Santarelli
(86) Numéro de dépôt international: PCT/FR2004/000884
(87) Numéro de publication internationale: WO 2005/092705

(56) Documents cités:
- EP-A- 1 162 138
- EP-A- 1 364 874
- WO-A-03/013903
- WO-A-03/053735
- US-A1- 2002 070 314

## Description

La présente invention concerne un aménagement intérieur de cabine d'aéronef.

Le domaine de la présente invention est l'aménagement intérieur des aéronefs destiné au transport de passagers et plus particulièrement les aéronefs exploités commercialement par des compagnies aériennes. Dans un tel aéronef, chaque passager dispose d'un siège mais selon le compartiment dans lequel ce siège est placé, le confort de ce siège est plus ou moins grand. Ainsi par exemple certains aéronefs comportent trois classes appelées couramment classe économique, classe affaire et première classe.

Généralement, pour toutes les classes de confort, les sièges sont disposés en rangées transversales par rapport à l'axe de l'avion (ou sens de déplacement de l'avion) ainsi qu'en colonnes longitudinales.

Pour rentabiliser leurs flottes d'avions, les compagnies aériennes ont un double souci. Elles souhaitent d'une part faire voyager le plus grand nombre possible de passagers dans un espace donné (la cabine de l'aéronef) et d'autre part elles souhaitent satisfaire et fidéliser leurs clients en leur offrant les meilleures prestations possibles en terme de confort et d'espace. Il existe ainsi plusieurs documents, tels par exemple WO-03/053735 et FR-2 843 730, qui proposent des aménagements intérieurs de cabine d'aéronef permettant d'optimiser l'espace disponible dans une telle cabine.

La présente invention concerne plus particulièrement les compartiments de classe affaire et de première classe dans lesquels les passagers peuvent voyager en position couchée. Le document EP-1 364 874 révèle un module individuel pour passager d'aéronef qui, combiné à d'autres,modules semblables, permet d'occuper de façon optimisée l'espace disponible dans une cabine d'aéronef tout en respectant les contraintes techniques imposées par les normes aéronautiques. Des figures de ce document montrent des combinaisons de modules permettant de loger un grand nombre de passagers dans une cabine. Toutefois, dans les aménagements proposés, certains sièges sont orientés dans le sens de déplacement de l'aéronef tandis que d'autres sont orientés dans le sens inverse.

La présente invention a alors pour but de fournir un aménagement de cabine d'aéronef permettant de disposer un maximum de passagers dans un espace donné, tous les sièges destinés à recevoir des passagers de cet aménagement étant orientés dans le même sens.

A cet effet, elle propose un ensemble de sièges d'aéronef destiné à équiper une cabine d'aéronef, comportant au moins deux colonnes de sièges voisines, les sièges étant disposés les uns derrière les autres dans chacune des colonnes de sièges et chaque siège étant convertible en couchette de manière à présenter une surface de couchage sensiblement allongée.

Selon l'invention, chaque siège lorsqu'il est converti en couchette présente une première partie de couchage et au moins une seconde partie de couchage de largeur moindre par rapport à la première partie ; dans deux colonnes voisines les sièges sont disposés en quinconce, de telle sorte que la première partie d'un siège d'une colonne se trouve face à une seconde partie de largeur moindre d'un siège de la seconde colonne.

Cette disposition de sièges en quinconce combinée à des sièges ne présentant pas, un fois convertis en couchette, une largeur constante permet de loger dans un espace donné un plus grand nombre de sièges sans dégrader le confort des passagers. La partie de plus grande largeur du siège converti en couchette est de préférence destinée à recevoir le tronc d'un passager tandis que les parties de la couchette de largeurs moindres reçoivent notamment la tête et les jambes du passager. La surface de couchage n'est pas forcément plane. Le siège dont il est question ici peut être un siège inclinable ne formant pas dans sa position "la plus inclinée" une surface de couchage sensiblement horizontale.

Une forme de réalisation avantageuse prévoit que chaque siège, lorsqu'il est converti en couchette, présente un bord longitudinal sensiblement rectiligne. De tels sièges peuvent ainsi s'adapter pour être disposés en colonnes soit le long d'un couloir soit le long d'une paroi de cabine. Dans cette forme de réalisation, l'ensemble de sièges d'aéronef selon l'invention comporte par exemple au moins deux types de sièges, un premier type de sièges présentant un bord longitudinal rectiligne placé à droite d'un passager prenant place sur ledit siège et un second type de sièges présentant un bord longitudinal rectiligne placé à gauche du passage prenant place dans la même position sur ce siège. On peut alors prévoir que les sièges d'une même colonne sont par exemple tous d'un même type.

Dans une première forme de réalisation, les sièges d'une même colonne de sièges sont espacés les uns des autres de telle sorte que lorsqu'ils sont convertis en couchette l'espace les séparant est inférieur à une dizaine de centimètres. De la sorte, la perte de place dans la cabine est minimisée et on arrive alors à loger un plus grand nombre de sièges dans un espace donné.

Dans une autre forme de réalisation, les sièges d'une même colonne de sièges sont espacés les uns des autres de telle sorte que lorsqu'ils sont convertis en couchette l'espace les séparant permet le passage d'un passager. Cette configuration peut notamment être utilisée lorsque l'ensemble de sièges selon l'invention se trouve contre une paroi de la cabine. Grâce aux passages prévus, l'accès aux sièges de la colonne de sièges se trouvant le long de la paroi de cabine peut se faire sans que les passagers occupant ces sièges près de la paroi ne doivent s'excuser auprès des passagers installés sur les sièges de l'autre colonne.

Dans le cas où les sièges d'une même colonne de sièges sont espacés les uns des autres, un coffre à bagages peut être disposé entre deux sièges voisins de cette colonne. Il s'agit ici par exemple d'une colonne de sièges se trouvant le long d'une paroi de cabine.

Un ensemble de sièges d'aéronef selon l'invention comporte par exemple deux colonnes de sièges.

Dans ce cas, lorsque les sièges présentent un bord longitudinal rectiligne, cet ensemble de sièges est par exemple délimité par un couloir longitudinal et des bords longitudinaux rectilignes de sièges se trouvent du côté dudit couloir.

Un ensemble de sièges d'aéronef selon l'invention peut aussi comporter trois colonnes de sièges.

Dans ce cas, les sièges d'une même colonne de sièges sont avantageusement espacés les uns des autres de telle sorte que lorsqu'ils sont convertis en couchette l'espace les séparant permet le passage d'un passager. De cette manière, il est possible d'accéder à la colonne centrale de sièges sans avoir à s'excuser auprès des passagers des colonnes latérales. Dans cette forme de réalisation, l'espace libre entre les sièges de la colonne centrale n'étant pas utile pour permettre le passage d'un passager, cet espace est avantageusement utilisé comme espace de rangement.

Un ensemble de trois colonnes de sièges prévoit par exemple que les sièges de chaque colonne latérale de sièges sont espacés les uns des autres de telle sorte que lorsqu'ils sont convertis en couchette l'espace les séparant permet le passage d'un passager, et que les sièges de la colonne centrale de sièges présentent, lorsqu'ils sont convertis en couchette, une longueur supérieure à la longueur des sièges des colonnes latérales lorsqu'ils sont convertis en couchette. Ces sièges de plus grande longueur peuvent alors être proposés à des passagers de grande taille.

Un ensemble de trois colonnes de sièges d'aéronef est de préférence délimité longitudinalement par deux couloirs de manière à faciliter l'accès à tous les sièges de cet ensemble. Les sièges des colonnes latérales présentent alors avantageusement un bord longitudinal sensiblement rectiligne du côté du couloir correspondant. Un tel ensemble peut présenter un axe de symétrie longitudinal.

Dans un ensemble de trois colonnes de sièges d'aéronef selon l'invention, les sièges de la colonne centrale peuvent être décalés longitudinalement par rapport aux sièges d'une colonne latérale tandis qu'ils peuvent être alignés avec les sièges de l'autre colonne latérale. Il est également possible d'avoir les sièges de la colonne centrale décalés longitudinalement par rapport aux sièges des deux colonnes latérales mais avec un décalage différent.

La présente invention propose aussi un ensemble de sièges d'aéronef comportant quatre colonnes de sièges.

Un tel ensemble est par exemple est constitué de deux ensembles de deux colonnes de sièges tels que décrits plus haut.

Les sièges d'une même colonne de sièges d'un ensemble de quatre colonnes de sièges sont de préférence espacés les uns des autres de telle sorte que lorsqu'ils sont convertis en couchette l'espace les séparant permet le passage d'un passager. De cette manière, il est possible d'accéder à tous les sièges de cet ensemble sans avoir à déranger des passagers déjà installés. Dans une telle configuration, l'espace laissé libre entre les sièges des colonnes centrales peut être utilisé pour loger un coffre à bagages puisqu'il est inutile pour laisser passer des passagers.

Une autre forme de réalisation d'un ensemble à quatre sièges prévoit que les sièges de chaque colonne latérale de sièges sont espacés les uns des autres de telle sorte que lorsqu'ils sont convertis en couchette l'espace les séparant permet le passage d'un passager, et que les sièges des colonnes centrales de sièges présentent, lorsqu'ils sont convertis en couchette, une longueur supérieure à la longueur des sièges des colonnes latérales lorsqu'ils sont convertis en couchette. Ces sièges des colonnes centrales peuvent alors accueillir des passagers de grande taille.

Pour une configuration à quatre colonnes de sièges, on peut aussi prévoir que les sièges de l'une des colonnes centrales sont alignés par rapport aux sièges de l'autre des colonnes centrales mais sont décalés par rapport aux sièges de la colonne latérale de sièges correspondante.

La présente invention concerne également un aéronef, caractérisé en ce qu'il comporte un ensemble de sièges tel que décrit ci-dessus.

Des détails et avantages de la présente invention ressortiront mieux de la description qui suit, faite en référence au dessin schématique annexé sur lequel :
La figure 1 représente schématiquement en vue de dessus un tronçon de cabine d'aéronef présentant cinq colonnes de sièges,
La figure 2 est une vue semblable à la figure 1 pour une cabine présentant sept colonnes de sièges,
La figure 3 est une variante d'aménagement de la cabine représentée sur la figure 2, et
La figure 4 est une vue de dessus schématique d'un tronçon de cabine d'aéronef comportant huit colonnes de sièges.

Les figures du dessin représentent des compartiments de cabine d'aéronef dans lesquels sont disposés des sièges convertibles. Ainsi un voyageur prenant place dans un tel compartiment peut aussi bien voyager en position assise qu'en position allongée, ou quasi-allongée.

En vue de dessus, chaque siège représenté au dessin, lorsqu'il est converti en couchette (plane ou quasi-plane), a un contour adapté à la morphologie humaine. La partie de la couchette destinée à recevoir le tronc du passager est de plus grande largeur tandis que les parties de la couchette destinées à recevoir les jambes et la tête du passager sont de largeurs moindres. Bien que non représenté sur le dessin, il est tout à fait possible d'envisager ici d'utiliser des modules tels ceux révélés dans le document EP-1 364 874.

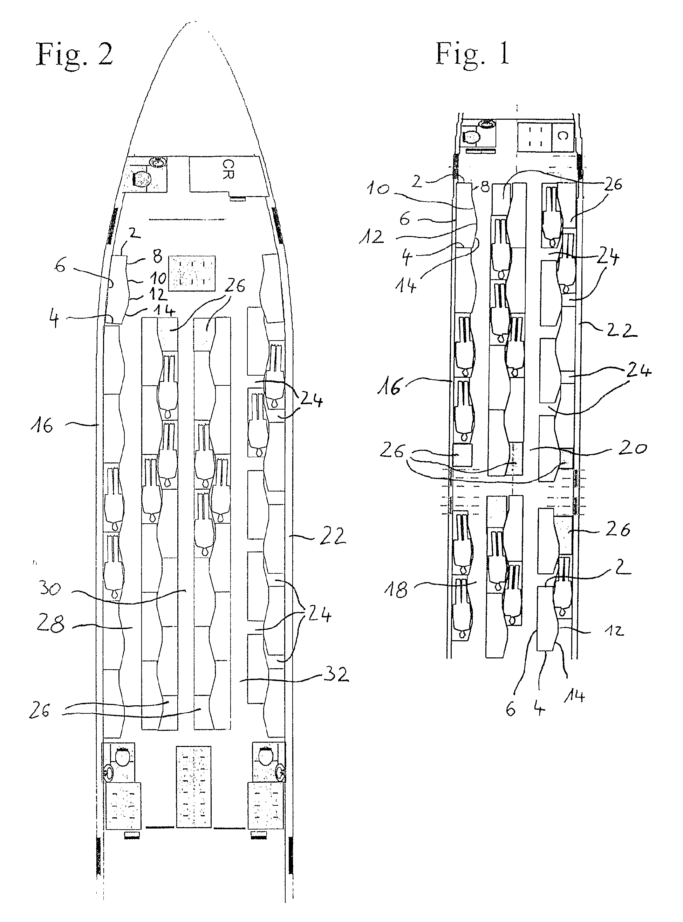

Dans le dessin ci-joint, chaque siège, lorsqu'il est converti en couchette, présente un contour de même forme (à une symétrie près). Ce contour (figure 1) présente tout d'abord deux extrémités transversales rectilignes. Une première extrémité 2 se trouve du côté de la couchette destinée à recevoir les pieds d'un voyageur tandis que l'autre extrémité transversale 4 se trouve à l'extrémité de la couchette destinée à recevoir la tête de ce voyageur. Ces extrémités transversales sont représentées rectilignes. On peut toutefois envisager ici d'autres formes : angles arrondis, entièrement arrondie, elliptique, etc....

Ces extrémités transversales 2, 4 sont reliées par des bords longitudinaux. Un premier bord longitudinal est rectiligne et s'étend perpendiculairement aux bords transversaux 2, 4. Ce bord longitudinal rectiligne est appelé dans la suite de la description bord rectiligne 6.

L'autre bord longitudinal présente une forme de ligne brisée. Tout d'abord, en partant du bord transversal 2, cette ligne brisée s'étend vers le bord transversal 4 en formant un premier tronçon 8 sensiblement parallèle au bord rectiligne 6. On a ainsi une partie de couchette de faible largeur. Le second tronçon 10 de la ligne brisée formant le second bord longitudinal réalise un élargissement de la couchette. La partie correspondante de la couchette reçoit par exemple les cuisses et le bassin d'un voyageur.

Un troisième tronçon 12 de la ligne brisée du bord longitudinal est à nouveau parallèle au bord rectiligne 6. Ce tronçon correspond par exemple à la partie de la couchette destinée à recevoir le buste d'un voyageur.

Enfin, le dernier et quatrième tronçon 14 de la ligne brisée formant le second bord longitudinal réalise un rétrécissement de la largeur de la couchette. La partie de la couchette correspondant à ce dernier et quatrième tronçon 14 est destinée à recevoir notamment la tête d'un voyageur.

On remarque sur les différentes figures du dessin qu'il y a deux types de siège. Le premier type de siège est tel que lorsqu'un voyageur est allongé sur le dos sur la couchette, sa tête se trouvant alors vers l'arrière de l'aéronef, le bord rectiligne 6 se trouve à sa droite. Pour l'autre type de siège, dans les mêmes conditions, le bord rectiligne 6 de la couchette correspondante se trouve à la gauche du voyageur.

Sur la figure 1, cinq colonnes de sièges sont représentées. On entend ici et dans la suite de la description par colonnes de sièges un ensemble de sièges disposés les uns derrière les autres longitudinalement par rapport à l'aéronef.

Une première colonne de sièges est disposée entre la paroi gauche 16 de la cabine et un premier couloir 18. Dans cette colonne, les sièges sont disposés les uns derrière les autres de telle sorte qu'en position couchette un bord transversal avant 2 vient au contact, ou quasiment au contact, d'un bord transversal 4 voisin. Un espace minimal est donc laissé entre deux sièges voisins d'une même colonne convertis en couchette. Dans cette colonne de sièges, tous les sièges sont d'un même type et le bord rectiligne 6 de ces sièges se trouve à chaque fois le long de la paroi gauche 16 de cabine.

Sensiblement au centre de la cabine représentée, se trouve un ensemble de deux colonnes. Cet ensemble est disposé entre le couloir 18 et un second couloir 20. Dans chacune de ces colonnes, on retrouve à chaque fois un même type de siège. Pour les sièges de la colonne se trouvant du côté du couloir 18, le bord rectiligne 6 se trouve à la gauche d'un passager voyageant dans le sens de déplacement de l'aéronef tandis que dans la seconde colonne, se trouvant du côté du couloir 20, le bord rectiligne 6 est placé à droite d'un passager voyageant dans le sens de déplacement de l'aéronef.

On remarque sur le dessin que les passagers de cet ensemble de deux colonnes sont disposés en quinconce. En effet, les sièges des colonnes ne sont pas disposés de manière à réaliser des rangées transversales, c'est-à-dire perpendiculaires aux colonnes. En effet, ces deux colonnes voisines dans chacune desquelles les sièges sont mis les uns à la suite des autres de manière à laisser un espace minimum entre deux sièges voisins convertis en couchette sont décalées dans le sens longitudinal l'une par rapport à l'autre. Ce décalage est choisi de telle sorte que la partie de la couchette de plus grande largeur, correspondant au troisième tronçon 12, d'une colonne, se trouve sensiblement au niveau d'une partie de largeur moindre d'un siège couchette de la colonne voisine. Ainsi, au centre de l'ensemble des deux colonnes, la partie de plus grande largeur d'un siège d'une colonne se trouve au niveau de la partie du siège couchette correspondant au premier tronçon 8 d'un siège de la colonne voisine.

Les deux dernières colonnes de sièges sont disposées entre le couloir 20 et une paroi de cabine droite 22. Les colonnes de cet ensemble de sièges se distinguent des colonnes décrites précédemment en ce qu'un espace 24 est laissé libre entre deux sièges couchettes voisins. Cet espace 24 libre est suffisant pour permettre le passage d'un voyageur. De cette manière, dans la colonne contiguë au couloir 20, des passages sont ménagés pour permettre l'accès aux sièges se trouvant le long de la paroi de cabine droite 22. Les passagers ayant un siège le long de cette paroi de cabine droite 22 peuvent ainsi accéder à leur siège sans gêner une personne se trouvant installée sur son siège dans la colonne contiguë au couloir 20.

On retrouve pour ces deux colonnes présentant des espaces libres 24 un décalage similaire au décalage décrit précédemment pour deux colonnes voisines. En effet, comme on le remarque sur le dessin, sauf éventuellement pour les sièges se trouvant aux extrémités d'une colonne, la partie de plus grande largeur d'un siège, correspondant au troisième tronçon 12, se trouve au niveau d'une partie de largeur moindre, dans le cas présent la partie correspondant au premier tronçon 8.

Compte tenu du décalage existant entre les diverses colonnes, des espaces 26 restent inoccupés par des sièges. Ils peuvent être mis à profit pour aménager des casiers de rangement.

Sur la figure 2, la cabine d'aéronef représentée comporte sept colonnes de sièges. On trouve dans cette configuration trois couloirs portant les références 28, 30 et 32. On retrouve ici aussi une paroi de cabine gauche 16 et une paroi de cabine droite 22. La colonne de sièges se trouvant le long de la paroi de cabine gauche 16 est semblable à la colonne de sièges se trouvant le long de la paroi de cabine gauche 16 de la figure 1. De même, les ensembles de deux colonnes de sièges se trouvant entre les couloirs 28 et 30, respectivement 30 et 32 sont similaires à l'ensemble de deux colonnes de sièges représenté sur la figure 1 entre les couloirs 18 et 20. L'ensemble de deux colonnes de sièges se trouvant du côté de la paroi de cabine droite 22 est également similaire à celui de la figure 1 se trouvant également le long de la paroi de cabine droite 22.

On remarque sur cette figure 2 que pour les colonnes se trouvant le long des parois de cabine 16 et 22, vers l'avant de l'aéronef, les sièges ne sont pas parfaitement alignés les uns derrière les autres mais la forme de la colonne s'adapte à la forme de la paroi de cabine correspondante. La forme des sièges permet ici une bonne adaptation à la forme de la paroi de cabine.

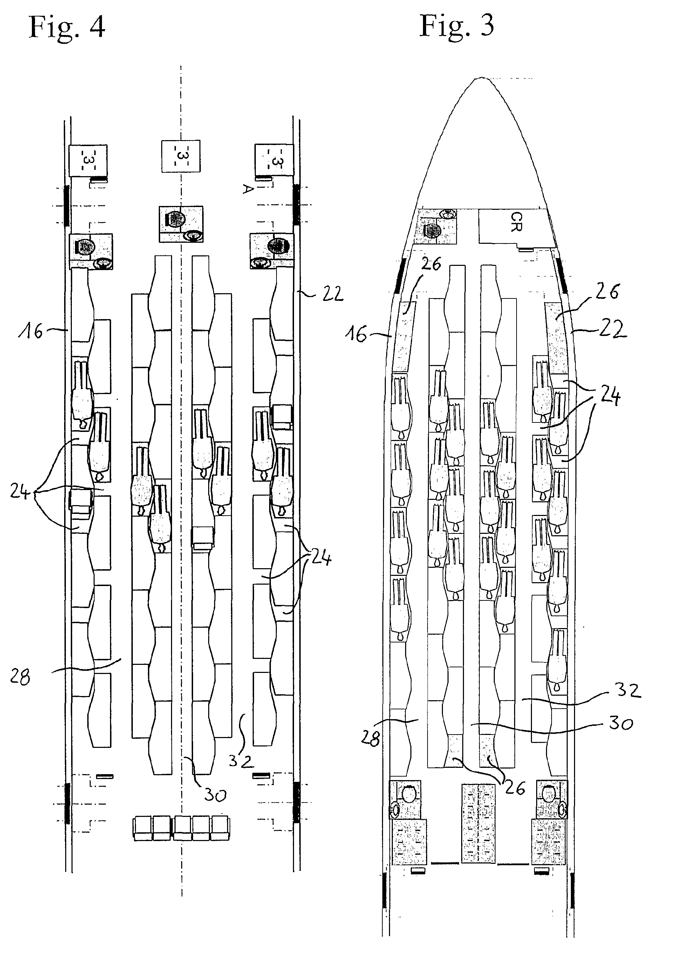

La figure 3 est une légère variante de réalisation de l'aménagement de la figure 2 qui permet de placer un plus grand nombre de sièges dans un même espace.

Enfin, sur la figure 4, on retrouve trois couloirs 28, 30 et 32. Les ensembles de deux colonnes de sièges situés à chaque fois entre deux couloirs sont similaires aux ensembles de deux colonnes de sièges disposés entre deux couloirs des figures 2 et 3. Du côté des parois de cabine, on a ici à chaque fois des ensembles de deux colonnes de sièges, les sièges étant espacés des uns des autres dans une même colonne de sièges.

D'autres configurations que celles représentées sur le dessin peuvent être envisagées. On peut ainsi par exemple, dans des cabines de largeur moindre, prévoir quatre colonnes de sièges avec un seul couloir central. On obtient alors une configuration similaire à celle de la figure 4 sans toutefois les quatre colonnes centrales de sièges.

On peut également prévoir des ensembles de trois ou quatre colonnes de sièges. Ainsi par exemple dans la configuration de la figure 4, il est possible de supprimer le couloir central 30 et venir accoler l'un à l'autre les deux ensembles de deux colonnes de sièges se trouvant de part et d'autre de ce couloir central 30. Cette configuration présente l'inconvénient que les passagers installés sur les sièges couchettes des colonnes centrales de cet ensemble de quatre colonnes doivent s'excuser auprès de leur voisin s'ils veulent accéder à ou quitter leur siège. Pour éviter cet inconvénient, il suffit alors de créer des passages entre les sièges comme représenté sur la figure 4 par exemple pour les colonnes de sièges se trouvant du côté des parois de cabine 16 et 22.

Dans ces ensembles de quatre colonnes de sièges, on a dans chaque colonne des sièges de même type (bord rectiligne 6 à droite ou à gauche) et une alternance de type de sièges d'une colonne à l'autre. Dans cet ensemble de quatre colonnes de sièges, on retrouve un décalage longitudinal entre les sièges de deux colonnes voisines sauf pour les deux colonnes centrales. Pour ces deux colonnes, on peut soit n'avoir aucun décalage, soit avoir un décalage identique au décalage existant entre deux autres colonnes, soit encore avoir un décalage différent.

Comme évoqué plus haut, il est également possible dans le cadre de l'invention d'avoir des ensembles de trois colonnes de sièges. De préférence, pour faciliter l'accès aux sièges de la colonne centrale, un espace, tel les espaces 24 des figures 1 à 4, est prévu à chaque fois entre deux sièges voisins d'une même colonne de sièges. On prévoit ici aussi avantageusement d'avoir dans chaque colonne de sièges un seul type de sièges et d'alterner d'une colonne à l'autre les types de sièges. Dans une telle configuration, avec trois colonnes de sièges, il est possible de prévoir un décalage longitudinal entre deux sièges de deux colonnes voisines mais il est également possible d'avoir un décalage pour les colonnes de sièges qui sont voisines par leurs bords longitudinaux de sièges non rectilignes et de ne pas avoir de décalage (ou bien le même décalage ou bien un décalage différent) pour les sièges des colonnes voisines par deux bords rectilignes.

Dans cette configuration de trois colonnes de sièges il peut être avantageux de prévoir pour la colonne centrale un troisième type de siège. Il s'agirait d'un siège présentant une forme symétrique par rapport à son axe longitudinal. Chaque bord longitudinal d'un tel siège présenterait une forme telle celle décrite plus haut en référence à la figure 1. L'utilisation de ce troisième type de siège permet alors d'optimiser la largeur de l'ensemble de trois colonnes de sièges, c'est-à-dire offrir le plus grand confort possible aux passagers voyageant sur ces sièges tout en ayant une largeur globale des trois colonnes la plus faible possible. On remarque ici que les espaces prévus plus haut entre les sièges d'une même colonne ne sont pas utilisés pour le passage des voyageurs en ce qui concerne les espaces laissés libres entre les sièges de la colonne centrale. On peut alors prévoir que les couchettes de ces sièges de la colonne centrale proposent une surface de couchage de plus grande longueur. Un tel siège couchette serait alors réservé à un passager de grande taille. On peut également utiliser les espaces libres entre les sièges de cette colonne centrale pour le rangement de bagages. Suivant l'aménagement retenu pour l'intérieur de la cabine, si assez d'espaces de rangement sont prévus de la sorte, il devient possible de supprimer tout coffre à bagages placé en hauteur.

Les remarques faites ci-dessus sur l'utilisation de l'espace laissé libre entre deux sièges couchettes de la colonne centrale d'un ensemble de trois colonnes de sièges (réalisation de surface de couchage plus longue ou d'espace de rangement) peuvent également s'appliquer aux colonnes centrales d'un ensemble de quatre colonnes de sièges décrit plus haut.

Les formes de réalisation présentées ci-dessus permettent d'accéder à tous les sièges décrits sans qu'il soit nécessaire de déranger un passager installé sur un autre siège.

La forme des sièges, lorsqu'ils sont convertis en couchette peut bien entendu varier des formes décrites ci-dessus. On peut par exemple utiliser aussi des modules de sièges tels ceux révélés dans le document EP-1 364 874 A1. En se référant à la figure 5A de ce document, qui est également la figure d'abrégé, on considère un module tels ceux représentés sur cette figure. Ce module de la figure d'abrégé présente un bord rectiligne (26) qui est placé à gauche d'un voyageur prenant place dans le module représenté. Ce module peut coopérer avec un autre module similaire dans lequel le bord rectiligne (26) se trouve à droite du passager voyageant à l'intérieur de ce module. Ces deux modules sont alors placés côte à côte de telle sorte qu'un premier segment (28) de l'un de ces modules vienne coopérer avec un second segment (30) de l'autre module. On retrouve alors des configurations similaires à celles représentées sur les figures 1 à 4 du dessin.

La présente invention ne se limite pas aux diverses formes de réalisation décrites ci-dessus à titre d'exemples non limitatifs. Elle concerne également toutes les variantes de réalisation à la portée de l'homme du métier dans le cadre des revendications ci-après.

L'invention n'est ainsi pas limitée aux cabines d'aéronef capables d'accueillir cinq, sept ou huit colonnes de sièges. L'invention s'adapte à toutes les largeurs de cabine et peut être envisagée à partir d'une cabine dans laquelle peuvent prendre place trois colonnes de sièges.

## Revendications

1. Ensemble de sièges d'aéronef destiné à équiper une cabine d'aéronef, comportant au moins deux colonnes de sièges voisines, les sièges étant disposés les uns derrière les autres dans chacune des colonnes de sièges et chaque siège étant convertible en couchette de manière à présenter une surface de couchage sensiblement allongée, et chaque siège lorsqu'il est converti en couchette présente une première partie de couchage et au moins une seconde partie de couchage de largeur moindre par rapport à la première partie, et dans deux colonnes voisines les sièges sont disposés en quinconce, de telle sorte que la première partie d'un siège d'une colonne se trouve côte à côte avec une seconde partie de largeur moindre d'un siège de la seconde colonne, **caractérisé en ce que** tous les sièges de cet ensemble sont orientés dans le même sens.

2. Ensemble de sièges d'aéronef selon la revendication 1, **caractérisé en ce que** chaque siège, lorsqu'il est converti en couchette présente un bord longitudinal (6) sensiblement rectiligne.

3. Ensemble de sièges d'aéronef selon la revendication 2, **caractérisé en ce qu'**il comporte au moins deux types de sièges, un premier type de sièges présentant un bord longitudinal rectiligne (6) placé à droite d'un passager prenant place sur ledit siège et un second type de sièges présentant un bord longitudinal rectiligne (6) placé à gauche du passage prenant place dans la même position sur ce siège.

4. Ensemble de sièges d'aéronef selon la revendication 3, **caractérisé en ce que** les sièges d'une même colonne sont tous d'un même type.

5. Ensemble de sièges d'aéronef selon l'une des revendications 1 à 4, **caractérisé en ce que** les sièges d'une même colonne de sièges sont espacés les uns des autres de telle sorte que lorsqu'ils sont convertis en couchette l'espace les séparant est inférieur à une dizaine de centimètres.

6. Ensemble de sièges d'aéronef selon l'une des revendications 1 à 4, **caractérisé en ce que** les sièges d'une même colonne de sièges sont espacés les uns des autres de telle sorte que lorsqu'ils sont convertis en couchette l'espace (24) les séparant permet le passage d'un passager.

7. Ensemble de sièges d'aéronef selon l'une des revendications 1 à 4, **caractérisé en ce que** les sièges d'une même colonne de sièges sont espacés les uns des autres et **en ce qu'**un coffre à bagages est disposé entre deux sièges voisins de cette colonne.

8. Ensemble de sièges d'aéronef selon l'une des revendications 1 à 7, **caractérisé en ce qu'**il comporte deux colonnes de sièges.

9. Ensemble de sièges d'aéronef selon les revendications 2 et 8, **caractérisé en ce qu'**il est délimité par un couloir longitudinal (18, 20 ; 28, 30, 32), et **en ce que** des bords longitudinaux rectilignes (6) de sièges se trouvent du côté dudit couloir (18, 20 ; 28, 30, 32).

10. Ensemble de sièges d'aéronef selon l'une des revendications 1 à 7, **caractérisé en ce qu'**il comporte trois colonnes de sièges.

11. Ensemble de sièges d'aéronef selon la revendication 10, **caractérisé en ce que** les sièges d'une même colonne de sièges sont espacés les uns des autres de telle sorte que lorsqu'ils sont convertis en couchette l'espace (24) les séparant permet le passage d'un passager.

12. Ensemble de sièges d'aéronef selon la revendication 11, **caractérisé en ce que** l'espace (24) libre entre les sièges de la colonne centrale est utilisé comme espace de rangement.

13. Ensemble de sièges d'aéronef selon la revendication 10, **caractérisé en ce que** les sièges de chaque colonne latérale de sièges sont espacés les uns des autres de telle sorte que lorsqu'ils sont convertis en couchette l'espace les séparant permet le passage d'un passager, et **en ce que** les sièges de la colonne centrale de sièges présentent, lorsqu'ils sont convertis en couchette, une longueur supérieure à la longueur des sièges des colonnes latérales lorsqu'ils sont convertis en couchette,

14. Ensemble de sièges d'aéronef selon l'une des revendications 10 à 13, **caractérisé en ce qu'**il est délimité longitudinalement par deux couloirs (18, 20; 28, 30, 32).

15. Ensemble de sièges d'aéronef selon la revendication 14, **caractérisé en ce que** les sièges des colonnes latérales présentent un bord longitudinal (6) sensiblement rectiligne du côté du couloir correspondant.

16. Ensemble de sièges d'aéronef selon la revendication 15, **caractérisé en ce qu'**il présente un axe de symétrie longitudinal.

17. Ensemble de sièges d'aéronef selon l'une des revendications 10 à 15, **caractérisé en ce que** les sièges de la colonne centrale sont décalés longitudinalement par rapport aux sièges d'une colonne latérale tandis qu'ils sont alignés avec les sièges de l'autre colonne latérale.

18. Ensemble de sièges d'aéronef selon l'une des revendications 10 à 15, **caractérisé en ce que** les sièges de la colonne centrale sont décalés longitudinalement par rapport aux sièges des deux colonnes latérales mais avec un décalage différent.

19. Ensemble de sièges d'aéronef selon l'une des revendications 1 à 7, **caractérisé en ce qu'**il comporte quatre colonnes de sièges.

20. Ensemble de sièges d'aéronef selon la revendication 19, **caractérisé en ce qu'**il est constitué de deux ensembles de deux colonnes de sièges selon l'une des revendications 8 ou 9,

21. Ensemble de sièges d'aéronef selon l'une des revendications 19 ou 20, **caractérisé en ce que** les sièges d'une même colonne de sièges sont espacés les une des autres de telle sorte que lorsqu'ils sont convertis en couchette l'espace (24) les séparant permet le passage d'un passager.

22. Ensemble de sièges d'aéronef selon la revendication 21, **caractérisé en ce que** l'espace laissé libre entre les sièges des colonnes centrales est utilisé pour loger un coffre à bagages.

23. Ensemble de sièges d'aéronef selon la revendication 19, **caractérisé en ce que** les sièges de chaque colonne latérale de sièges sont espacés les uns des autres de telle sorte que lorsqu'ils sont convertis en couchette l'espace les séparant permet le passage d'un passager, et **en ce que** les sièges des colonnes centrales de sièges présentent, lorsqu'ils sont convertis en couchette, une longueur supérieure à la longueur des sièges des colonnes latérales lorsqu'ils sont convertis en couchette,

24. Ensemble de sièges d'aéronef selon la revendication 19, **caractérisé en ce que** les sièges de l'une des colonnes centrales sont alignés par rapport aux sièges de l'autre des colonnes centrales mais sont décalés par rapport aux sièges de la colonne latérale de sièges correspondante.

25. Aéronef, **caractérisé en ce qu'**il comporte un ensemble de sièges selon l'une des revendications 1 à 24.

## Patentansprüche

1. Luftfahrzeugsitzanordnung, die dazu bestimmt ist, eine Luftfahrzeugkabine auszurüsten, umfassend mindestens zwei Kolonnen von benachbarten Sitzen, wobei die Sitze in jeder der Sitzkolonnen hintereinander angeordnet sind und jeder Sitz in eine Schlafliege umgewandelt werden kann, so dass er eine im Wesentlichen langgestreckte Schlaffläche darbietet und jeder Sitz, wenn er in eine Schlafliege umgewandelt ist, einen ersten Schlafteil und mindestens einen zweiten Schlafteil aufweist, der weniger breit als der erste Teil ist, und wobei die Sitze in zwei benachbarten Kolonnen in Fünferanordnungen angeordnet sind, so dass sich der erste Teil eines Sitzes einer Kolonne neben einem weniger breiten zweiten Teil eines Sitzes der zweiten Kolonne befindet, **dadurch gekennzeichnet, dass** alle Sitze dieser Anordnung in der gleichen Richtung ausgerichtet sind.

2. Luftfahrzeugsitzanordnung nach Anspruch 1, **dadurch gekennzeichnet, dass** jeder Sitz, wenn er in eine Schlafliege umgewandelt ist, einen im Wesentlichen geradlinigen Längsrand (6) aufweist.

3. Luftfahrzeugsitzanordnung nach Anspruch 2, **dadurch gekennzeichnet, dass** sie mindestens zwei Sitzarten umfasst: eine erste Sitzart, die einen geradlinigen Längsrand (6) aufweist, der rechts neben einem auf dem Sitz Platz nehmenden Passagier platziert ist, und eine zweite Sitzart, die einen geradlinigen Längsrand (6) aufweist, der links neben dem in derselben Position auf diesem Sitz Platz nehmenden Passagier platziert ist.

4. Luftfahrzeugsitzanordnung nach Anspruch 3, **dadurch gekennzeichnet, dass** die Sitze ein und derselben Kolonne alle derselben Art sind.

5. Luftfahrzeugsitzanordnung nach einem der Ansprüche 1 bis 4, **dadurch gekennzeichnet, dass** die Sitze ein und derselben Sitzkolonne so voneinander beabstandet sind, dass der Raum, der sie trennt, wenn sie in Schlafliegen umgewandelt sind, kleiner als etwa zehn Zentimeter ist.

6. Luftfahrzeugsitzanordnung nach einem der Ansprüche 1 bis 4, **dadurch gekennzeichnet, dass** die Sitze ein und derselben Sitzkolonne so voneinander beabstandet sind, dass der Raum (24), der sie trennt, wenn sie in Schlafliegen umgewandelt sind, das Durchgehen eines Passagiers gestattet.

7. Luftfahrzeugsitzanordnung nach einem der Ansprüche 1 bis 4, **dadurch gekennzeichnet, dass** die Sitze ein und derselben Sitzkolonne voneinander beabstandet sind und dass ein Gepäckraum zwischen zwei benachbarten Sitzen dieser Kolonne angeordnet ist.

8. Luftfahrzeugsitzanordnung nach einem der Ansprüche 1 bis 7, **dadurch gekennzeichnet, dass** sie zwei Sitzkolonnen umfasst.

9. Luftfahrzeugsitzanordnung nach den Ansprüchen 2 und 8, **dadurch gekennzeichnet, dass** sie durch einen Längsgang (18, 20; 28, 30, 32) begrenzt ist und dass sich geradlinige Sitzlängsränder (6) auf der Seite des Gangs (18, 20; 28, 30, 32) befinden.

10. Luftfahrzeugsitzanordnung nach einem der Ansprüche 1 bis 7, **dadurch gekennzeichnet, dass** sie drei Sitzkolonnen umfasst.

11. Luftfahrzeugsitzanordnung nach Anspruch 10, **dadurch gekennzeichnet, dass** die Sitze ein und derselben Sitzkolonne so voneinander beabstandet sind, dass der Raum (24), der sie trennt, wenn sie in Schlafliegen umgewandelt sind, das Durchgehen eines Passagiers gestattet.

12. Luftfahrzeugsitzanordnung nach Anspruch 11, **dadurch gekennzeichnet, dass** der freie Raum (24) zwischen den Sitzen der mittleren Kolonne als Stauraum verwendet wird.

13. Luftfahrzeugsitzanordnung nach Anspruch 10, **dadurch gekennzeichnet, dass** die Sitze jeder seitlichen Sitzkolonne so voneinander beabstandet sind, dass der Raum, der sie trennt, wenn sie in Schlafliegen umgewandelt sind, das Durchgehen eines Passagiers gestattet, und dass die Sitze der mittleren Sitzkolonne, wenn sie in Schlafliegen umgewandelt sind, eine Länge aufweisen, die größer als die Länge der Sitze der seitlichen Kolonnen ist, wenn sie in Schlafliegen umgewandelt sind.

14. Luftfahrzeugsitzanordnung nach einem der Ansprüche 10 bis 13, **dadurch gekennzeichnet, dass** sie in Längsrichtung durch zwei Gänge (18, 20; 28, 30, 32) begrenzt ist.

15. Luftfahrzeugsitzanordnung nach Anspruch 14, **dadurch gekennzeichnet, dass** die Sitze der seitlichen Kolonnen einen im Wesentlichen geradlinigen Längsrand (6) auf der Seite des entsprechenden Gangs aufweisen.

16. Luftfahrzeugsitzanordnung nach Anspruch 15, **dadurch gekennzeichnet, dass** sie eine Längssymmetrieachse aufweist.

17. Luftfahrzeugsitzanordnung nach einem der Ansprüche 10 bis 15, **dadurch gekennzeichnet, dass** die Sitze der mittleren Kolonne bezüglich der Sitze einer seitlichen Kolonne in Längsrichtung versetzt sind, während sie auf die Sitze der anderen seitlichen Kolonne ausgerichtet sind.

18. Luftfahrzeugsitzanordnung nach einem der Ansprüche 10 bis 15, **dadurch gekennzeichnet, dass** die Sitze der mittleren Kolonne bezüglich der Sitze der beiden seitlichen Kolonnen in Längsrichtung versetzt sind, jedoch mit einem anderen Versatz.

19. Luftfahrzeugsitzanordnung nach einem der Ansprüche 1 bis 7, **dadurch gekennzeichnet, dass** sie vier Sitzkolonnen umfasst.

20. Luftfahrzeugsitzanordnung nach Anspruch 19, **dadurch gekennzeichnet, dass** sie aus zwei Anordnungen mit zwei Sitzkolonnen nach Anspruch 8 oder 9 besteht.

21. Luftfahrzeugsitzanordnung nach Anspruch 19 oder 20, **dadurch gekennzeichnet, dass** die Sitze ein und derselben Sitzkolonne so voneinander beabstandet sind, dass der Raum (24), der sie trennt, wenn sie in Schlafliegen umgewandelt sind, das Durchgehen eines Passagiers gestattet.

22. Luftfahrzeugsitzanordnung nach Anspruch 21, **dadurch gekennzeichnet, dass** der zwischen den Sitzen der mittleren Kolonnen freigelassene Raum zur Aufnahme eines Gepäckraums verwendet wird.

23. Luftfahrzeugsitzanordnung nach Anspruch 19, **dadurch gekennzeichnet, dass** die Sitze jeder seitlichen Sitzkolonne so voneinander beabstandet sind, dass der Raum, der sie trennt, wenn sie in Schlafliegen umgewandelt sind, das Durchgehen eines Passagiers gestattet, und dass die Sitze der mittleren Sitzkolonnen, wenn sie in Schlafliegen umgewandelt sind, eine Länge aufweisen, die größer als die Länge der Sitze der seitlichen Kolonnen ist, wenn sie in Schlafliegen umgewandelt sind.

24. Luftfahrzeugsitzanordnung nach Anspruch 19, **dadurch gekennzeichnet, dass** die Sitze einer der mittleren Kolonnen zwar auf die Sitze der anderen der mittleren Kolonnen ausgerichtet sind, aber bezüglich der Sitze der entsprechenden seitlichen Sitzkolonne versetzt sind.

25. Luftfahrzeug, **dadurch gekennzeichnet, dass** es eine Luftfahrzeugsitzanordnung nach einem der Ansprüche 1 bis 24 umfasst.

## Claims

1. Set of airline seats designed to be fitted to an aircraft cabin, comprising at least two adjoining columns of seats, the seats being arranged one behind the other in each of the columns of seats and it being possible to convert each seat into a bed in order to present a substantially elongate sleeping surface, and each seat, when it is converted into a bed, has a first sleeping part and at least one second sleeping part which is narrower than the first part, and in two adjoining columns the seats are in an offset arrangement such that the first part of a seat of one column is next to a second, narrower part of a seat of the second column, **characterised in that** all the seats of this set are oriented in the same direction.

2. Set of airline seats according to claim 1, **characterised in that** each seat, when it is converted into a bed, has a substantially straight longitudinal edge (6).

3. Set of airline seats according to claim 2, **characterised in that** it comprises at least two seat types, a first seat type having a straight longitudinal edge (6) placed on the right of a passenger occupying said seat and a second seat type having a straight longitudinal edge (6) placed on the left of a passenger occupying the same position on this seat.

4. Set of airline seats according to claim 3, **characterised in that** the seats of a given column are all of the same type.

5. Set of airline seats according to one of claims 1 to 4, **characterised in that** the seats of a given column of seats are spaced apart from one another such that, when they are converted into beds, the space between them is less than approximately ten centimetres.

6. Set of airline seats according to one of claims 1 to 4, **characterised in that** the seats of a given column of seats are spaced apart from one another such that, when they are converted into beds, the space (24) between them is sufficient to allow a passenger through.

7. Set of airline seats according to one of claims 1 to 4, **characterised in that** the seats of a given column of seats are spaced apart from one another and **in that** a luggage compartment is arranged between two adjacent seats of this column.

8. Set of airline seats according to one of claims 1 to 7, **characterised in that** it comprises two columns of seats.

9. Set of airline seats according to claims 2 and 8, **characterised in that** it is delimited by a longitudinal aisle (18, 20; 28, 30, 32), and **in that** the straight longitudinal edges (6) of the seats are on the side of said aisle (18, 20; 28, 30, 32).

10. Set of airline seats according to one of claims 1 to 7, **characterised in that** it comprises three columns of seats.

11. Set of airline seats according to claim 10, **characterised in that** the seats of a given column of seats are spaced apart from one another such that, when they are converted into beds, the space (24) between them is sufficient to allow a passenger through.

12. Set of airline seats according to claim 11, **characterised in that** the free space (24) between the seats of the central column is used as a storage space.

13. Set of airline seats according to claim 10, **characterised in that** the seats of each lateral column of seats are spaced apart from one another such that, when they are converted into beds, the space between them is sufficient to allow a passenger through, and **in that** the seats of the central column of seats are longer, when converted into beds, than the seats of the lateral columns when they are converted into beds.

14. Set of airline seats according to one of claims 10 to 13, **characterised in that** it is delimited longitudinally by two aisles (18, 20; 28, 30, 32).

15. Set of airline seats according to claim 14, **characterised in that** the seats of the lateral columns have a substantially straight longitudinal edge (6) on the side of the corresponding aisle.

16. Set of airline seats according to claim 15, **characterised in that** it has a longitudinal axis of symmetry.

17. Set of airline seats according to one of claims 10 to 15, **characterised in that** the seats of the central column are offset longitudinally with respect to the seats of one lateral column whereas they are aligned with the seats of the other lateral column.

18. Set of airline seats according to one of claims 10 to 15, **characterised in that** the seats of the central column are offset longitudinally with respect to the seats of both lateral columns, but with a different offset.

19. Set of airline seats according to one of claims 1 to 7, **characterised in that** it comprises four columns of seats.

20. Set of airline seats according to claim 19, **characterised in that** it consists of two sets of two columns of seats according to either of claims 8 and 9.

21. Set of airline seats according to either of claims 19 and 20, **characterised in that** the seats of a given column of seats are spaced apart from one another such that, when they are converted into beds, the space (24) between them is sufficient to allow a passenger through.

22. Set of airline seats according to claim 21, **characterised in that** the free space left between the seats of the central columns is used to house a luggage compartment.

23. Set of airline seats according to claim 19, **characterised in that** the seats of each lateral column of seats are spaced apart from one another such that, when they are converted into beds, the space between them is sufficient to allow a passenger through, and **in that** the seats of the central columns of seats are longer, when converted into beds, than the seats of the lateral columns when they are converted into beds.

24. Set of airline seats according to claim 19, **characterised in that** the seats of one of the central columns are aligned with respect to the seats of the other of the central columns but are offset with respect to the seats of the corresponding lateral column of seats.

25. Aircraft, **characterised in that** it comprises a set of seats according to one of claims 1 to 24.
